# EUROPÄISCHE PATENTSCHRIFT

(11) **EP 3 345 704 B1**
(45) Veröffentlichungstag und Bekanntmachung des Hinweises auf die Patenterteilung: **09.07.2025**
(21) Anmeldenummer: 18150818.5
(22) Anmeldetag: 09.01.2018
(51) Int. Cl.: B23B 49/02

(54) **BOHRUNTERSTÜTZUNGSVORRICHTUNG**
DRILLING SUPPORT DEVICE
DISPOSITIF D'AIDE AU PERÇAGE

(30) Priorität: 10.01.2017 DE 102017200249
(43) Veröffentlichungstag der Anmeldung: 11.07.2018
(73) Patentinhaber: Özdemir, Ali, 85368 Moosburg an der Isar (DE)
(72) Erfinder: Özdemir, Ali, 85368 Moosburg an der Isar (DE)
(74) Vertreter: Winter, Brandl - Partnerschaft mbB

(56) Entgegenhaltungen:
- EP-A1- 0 894 560
- CN-U- 201 552 325
- GB-A- 2 313 563
- GB-A- 2 435 438
- US-A- 2 847 880
- US-A1- 2012 288 339

## Beschreibung

Die vorliegende Erfindung befasst sich mit einer Vorrichtung bzw. einem System zum Erleichtern des freihändigen Bohrens von Löchern, insbesondere Löchern in Hauswänden und -decken, und zur Verlängerung der Standzeit von dazu genutzten Bohrern selbst bei hartem Wandmaterial wie Beton oder Fliesen.

Bei praktisch allen Renovierungsarbeiten in Wohnungen und Häusern sowie beim Erstbezug werden Löcher in Möbelteile wie Bretter, in Wände und/oder Decken und Fußböden (im Folgenden sind Möbelteile, Decken und Fußböden ebenfalls gemeint, wenn nur "Wände" bzw. "Zimmerwände" genannt sind) gebohrt, um beispielsweise Regale, Schränke, Armaturen, Heizungen, Handtuchhalter, Lampen, Kabel und dergleichen dauerhaft anzubringen. Sehr häufig werden derartige Bohrungen nach Abschluss aller Renovierungsarbeiten, beispielsweise Malerarbeiten oder Fliesenlegen bzw. Verkacheln nötig, um die Räume vollständig einzurichten.

Bei diesen Bohrungen können sich die folgenden durch die Erfindung zu lösenden Probleme ergeben:
Insbesondere hochwertige Fliesen werden aus sehr hartem Material gefertigt, beispielsweise Keramik oder hartem Gestein wie Granit. Auch Betonwände sind für Bohrer schwer zu durchdringen. Muss in derartigem Material gebohrt werden, werden herkömmlich Diamantbohrer verwendet, entweder als Spiral- oder als Kernlochbohrer. Diese Bohrer sind jedoch teuer und werden sehr schnell stumpf, besonders, wenn sie nicht gekühlt werden und daher ausglühen. Diesem Problem begegnet man bisher durch häufiges Herausziehen des Bohrers und Eintauchen desselben in ein Kühlmedium (z.B. Wasser), durch aufwändige Vorrichtungen an der Handbohrmaschine, um ein Kühlmedium auf den Bohrer oder ins Bohrloch zu fördern, oder durch intermittierendes Sprühen eines Kühlmediums auf den Bohrer während des Bohrens beispielsweise durch einen Assistenten mit einer Sprühflasche.

Bohrt man nun auf herkömmliche Weise in eine Wand (eine Zimmerwand oder einen anderen zu bohrenden Gegenstand, dessen Oberfläche möglichst sauber bleiben werden soll, wie ein Möbelteil oder dergleichen), entsteht zudem zwangsläufig Bohrstaub, der - besonders in einem frisch renovierten Raum mit möglicherweise nicht vollständig abgebundener Wandfarbe oder nicht vollständig abgebundenem Fugensilikon zwischen Fliesen - aufwändige Reinigungsarbeiten erforderlich macht und zudem u.U. auch gesundheitsschädlich sein kann. Dieser Schwierigkeit wird häufig zumindest teilweise durch Absaugvorrichtungen begegnet, die entweder an der Bohrmaschine vorgesehen sind oder durch einen Assistenten in die Nähe des/unter das Loch gehalten werden. Diese Vorrichtungen sind jedoch teuer, aufwändig (durch den Einsatz eines weiteren Arbeiters) und zudem entfernen sie den Bohrstaub nicht vollständig. Schließlich sind derartige Vorrichtungen nicht ohne weiteres mit der oben beschriebenen Kühlung zu kombinieren, da sie auch das Kühlmedium absaugen und dadurch eventuell an unerwünschte Orte bringen. Schließlich können Absaugvorrichtungen durch das Kühlmedium bzw. einen aus Kühlmedium und Bohrstaub zusammengesetzten Schlamm langfristig selbst beschädigt bzw. zu stark verschmutzt werden.

Im Stand der Technik sind verschiedene Vorrichtungen bekannt, die Lösungsvorschläge zum Kühlen und/oder Entfernen von Staub anbieten.

So offenbart die DE 20 2009 004 053 U1 einen Kühlkörper für eine Ständerbohrmaschine mit einer Führungseinheit und einem Hauptkörper mit einem Schwamm. Die Führungseinheit liegt auf dem Hauptkörper. Der Hauptkörper wird auf dem zu bearbeitenden Werkstück, beispielsweise einem Metallteil, über einen seitlich angeordneten Saugnapf befestigt. Im Hauptkörper ist eine Führungshülse und darunter ein Schwamm vorgesehen, der mit Kühlmittel gefüllt ist und ein Loch für den Bohrer in der Mitte aufweist.

Die DE 60 2004 003 748 T2 lehrt eine handbetätigte Bohrvorrichtung mit Hohlbohrer (mit Diamantkopf oder dgl.) und integrierter Kühlung. In den eigentlichen, speziell geformten Hohlbohrer wird nach der Lehre dieser Druckschrift eine Tasche mit Kühlflüssigkeit eingeführt. Hinter der Tasche ist ein längsverschiebbarer Bohrerhalter vorgesehen, der beim Aufbringen von Druck auf die Bohrerspitze einen Teil des Drucks auf die Tasche umleitet und diese einreißt. Das enthaltene Kühlmedium soll dadurch zur Bohrerspitze gedrückt werden und dort aus dem Hohlbohrer austreten.

Die DE 33 06 563 A1 zeigt ein Bohrhilfsgerät zum staubfreien Herstellen von geraden, tiefengenauen Bohrlöchern in Wänden und zum Verbinden von Brettern mit Stiften. Eine Platte mit einem im rechten Winkel davon weg verlaufenden Hals, in den eine Bohrmaschine einsetzbar ist, weist an ihrer Unterseite (der von der Bohrmaschine abgewandten Seite) einen Deckel mit einem Moosgummibelag auf. Der Bohrer wird durch eine Buchse in der Platte und durch den Hals an der Bohrmaschine doppelt geführt. Der Hals ist zweiteilig, so dass sein Oberteil relativ zum Unterteil während des Bohrens axial verschiebbar ist.

Die Vorrichtung nach der DE 20 2009 004 053 U1 ist explizit für Ständerbohrmaschinen vorgesehen und benötigt für die Halterung mittels Saugnapf eine vergleichsweise große, glatte Fläche neben der eigentlichen Bohrung, wie sie bei der Metallbearbeitung typisch ist. Zudem wird das Führen des Bohrers durch den Bohrständer übernommen. Daher ist die entsprechende Lehre auf das freihändige Bohren in Wänden mit vergleichsweise rauer Oberfläche nicht übertragbar. Die beiden letztgenannten Vorrichtungen mögen dagegen für das Bohren in Wänden vorgesehen sein, verlangen jedoch relativ aufwändige, an der Bohrmaschine anzubringende Konstruktionen. Diese versperren den Blick auf das Bohrloch, so dass es schwierig ist, den gewünschten Bohrpunkt genau anzuvisieren. Außerdem erhöhen sie das Gewicht der Bohrmaschine. Beides ist unter ergonomischen Gesichtspunkten ungünstig.

Die GB 2 435 438 A, die eine Bohrunterstützungsvorrichtung nach den Oberbegriffen der Ansprüche 1 und 5 offenbart, schlägt eine Art "Auffangbehälter" 14 für Staub vor, der an einer auf die Wand geklebten Bohrerführung 12 befestigt wird. Allerdings beschäftigt sich die GB 2 435 438 A nicht mit der Kühlung eines Bohrers.

Die DE 2 064 813 U1 zeigt eine Manschette als Staubauffangbehälter, der vom Bohrenden mit einer Hand auf eine Wand gedrückt und mit dem Bohrer in der anderen Hand durchstoßen werden soll. Eine Kühlung wird dabei nicht erwähnt. Umgekehrt offenbart die US 2 847 880 A eine mit einem wachsartigen Kühlmittel gefüllte Manschette, die vom Bohrer durchstoßen wird. Durch die Drehung des Bohrers soll das Kühlmittel schmelzen und so den Bohrer kühlen. Es wird aus der Beschreibung zwar nicht deutlich, wie ein Mitdrehen der Manschette mit dem Bohrer verhindert werden soll, die Manschette könnte jedoch beispielsweise von Hand gehalten werden.

Die EP 0 894 560 A1 offenbart eine Bohrhilfe, die ähnlich auch aus der GB 2 313 563 A bekannt ist, und die aus einem durchbohrbaren zylinderförmigen Material besteht, das auf das zukünftige Bohrloch geklebt und anschließend durchbohrt wird. In der Mitte soll die Bohrhilfe nach der GB 2 313 563 A eine Art Körnung aufweisen, damit die Bohrerspitze nicht verläuft. Die Bohrhilfe soll, nachdem sie durchbohrt wurde, den Bohrer führen und ein Splittern der gebohrten Oberfläche vermeiden. Kühlung wird in diesen Druckschriften nicht erwähnt.

Die US 2012/0 288 339 A1 beschäftigt sich mit dem Auffangen von Bohrstaub am Bohrloch. Hierzu wird ein Bohrpad auf das Bohrloch geklebt, und lappenartige Einsätze im Bohrpad sollen den Bohrstaub während des Bohrens vom Bohrer abwischen. Erneut wird nichts zum Kühlen des Bohrers gesagt.

Die DE 10 2009 054 779 A1 offenbart eine Bohrerführung, an der ein Schwamm oder eine vergleichbare Auffangeinrichtung vorgesehen ist, die von außen an eine Bohrstelle herangeführtes Kühlmittel sowie darin enthaltenen Bohrstaub aufnimmt. Da diese Druckschrift im Gegensatz zur GB 2 435 438 A eine Kühlung zumindest erwähnt, auch wenn diese anders als in der Erfindung realisiert wird, wird sie als nächstkommenden Stand der Technik angesehen, gegen den der Anspruch 1 abgegrenzt ist.

Es ist daher die Aufgabe der Erfindung, eine Bohrunterstützungsvorrichtung für das Bohren in Wänden zu schaffen, die eine ausreichende Kühlung des Bohrers erreichen und die Abgabe von Staub aus dem Bohrloch verhindern kann. Dabei soll weder das vom Nutzer zu tragende Gewicht der Bohrmaschine beim Bohren erhöht noch die visuelle Kontrolle des Bohrens behindert werden. Zudem ist selbstverständlich wünschenswert, diese Ziele möglichst kostengünstig zu erreichen.

Diese Aufgabe wird durch eine Vorrichtung nach Anspruch 1 oder nach Anspruch 5 gelöst. Vorteilhafte Weiterbildungen sind Gegenstand der Unteransprüche.

Eine erfindungsgemäße Vorrichtung umfasst eine Zentrierhülse und eine winklig zur Zentrierhülse an deren axialem Ende vorgesehene erste Wand. Auf die erste Wand ist ein Haftmittel, insbesondere ein Klebstoff, aufgebracht. Bei ebenem Untergrund kann als "Haftmittel" prinzipiell auch ein Saugnapf verwendbar sein; dieser muss jedoch eine innere Dichtlippe um die Zentrierhülse aufweisen, um ein Vakuum zu erzeugen, ohne die Funktion der Zentrierhülse zu beeinträchtigen.

Dank des Haftmittels ist die erste Wand der Bohrunterstützungsvorrichtung einfach an der Zimmerwand anbringbar, in die gebohrt werden soll. Dabei ist durch die Zentrierhülse während des Positionierens (Klebens) eine angezeichnete Mitte der anzubringenden Bohrung stets sichtbar. Das Haftmittel wird so gewählt, dass es nach dem Bohren rückstandsfrei von der zu durchbohrenden Wand ablösbar ist. Ist die Bohrunterstützungsvorrichtung angebracht, wird der Bohrer durch die Zentrierhülse sicher auf die zu bohrende Stelle geführt. Beim Bohren entstehender Bohrstaub wird zu einem kleinen Teil durch das Haftmittel aufgenommen und zum größten Teil durch die Zentrierhülse von der Wand nach hinten weggeführt, so dass eine Verschmutzung der Wand weitgehend vermieden wird. Eine hinter der Zentrierhülse angesetzte Absaugvorrichtung kann bei trockenem Bohren den Staub in genügender Entfernung von der Wand aufnehmen. Ist die Zentrierhülse rechtwinklig zur ersten Wand und damit zur Zimmerwand, die nach dem Anbringen parallel zur ersten Wand ist, kann ein gerades Bohrloch gesetzt werden. Für Fälle, in denen nicht rechtwinklig zur Wand zu setzende Bohrungen erforderlich sein sollten, kann jedoch eine Bohrunterstützungsvorrichtung hergestellt werden, bei der der gewünschte Winkel zwischen erster Wand und Zentrierhülse vorgegeben ist.

Erfindungsgemäß umfasst die Bohrunterstützungsvorrichtung nach Anspruch 1 weiterhin mindestens eine zweite Wand, die an die erste Wand anschließt und gemeinsam mit der ersten Wand einen Hohlraum um mindestens einen Teil der Zentrierhülse bildet, wobei der Hohlraum mit einem Kühl-/ Schmiermittel (im Folgenden: Kühlmittel) gefüllt ist. Nach dem Anzeichnen der Bohrung und Aufkleben der Bohrunterstützungsvorrichtung mit visueller Kontrolle durch die Zentrierhülse wird der Bohrer so angesetzt, dass er die zweite Wand öffnet und durch das Kühlmittel geht, bevor er in die Zentrierhülse eindringt und anschließend das eigentliche Bohren beginnt. Dadurch wird dafür gesorgt, dass dieses Kühlmittel während des Bohrens zum Bohrer vordringen kann.

An der Seite der Zentrierhülse können Durchbrüche vorgesehen sein, durch die das Kühlmittel in die Zentrierhülse eintreten und Bohrstaub ins Kühlmittel zwischen der ersten und der zweiten Wand austreten kann. Alternativ kann eine Trennfolie oder dergleichen zwischen der Zentrierhülse und dem Hohlraum beim Eindringen des Bohrers in die Zentrierhülse durchstoßen werden, was zusammen mit den Erschütterungen durch das Bohren dazu führt, dass das Kühlmittel zum Bohrer vordringt. Zudem wird der Bohrstaub bei dieser Ausführungsform im Kühlmittel aufgenommen und kann daher die Umgebung nicht mehr verschmutzen.

Ferner können die zweite Wand und/oder die Zentrierhülse vorzugsweise einen Verschluss bzw. ein Ventil aufweisen, der vom Bohrer durchstoßbar ist, aber auch nach dem Durchstoßen eine gewisse Dichtwirkung hat. Dadurch wird erreicht, dass das Kühlmittel und der Bohrstaub in der Bohrunterstützungsvorrichtung verbleiben und die Umgebung nicht verschmutzen.

Zumindest dieser Verschluss, idealerweise jedoch die gesamte Bohrunterstützungsvorrichtung oder zumindest ein wesentlicher Teil davon, ist vorzugsweise aus durchsichtigem Material hergestellt. Ist nur der Teil der Bohrunterstützungsvorrichtung oberhalb der Zentrierhülse sowie ein eventueller Abschluss der Bohrunterstützungsvorrichtung unterhalb der Zentrierhülse durchsichtig, kann man dennoch visuell beim Aufbringen der Bohrunterstützungsvorrichtung auf die zu bohrende Wand das korrekte Anbringen relativ zum angezeichneten Bohrpunkt kontrollieren. Ist die gesamte Bohrunterstützungsvorrichtung (oder sind zumindest noch weitere Teile davon) durchsichtig, kann zusätzlich beim Bohren visuell die Aufnahme des Bohrstaubs in der Bohrunterstützungsvorrichtung und der Grad der Verschmutzung des Kühlmittels erkannt werden, bei geringer Verschmutzung des Kühlmittels ist sogar eine visuelle Kontrolle der Eindringtiefe des Bohrers in die Zimmerwand möglich. Diese Eindringtiefe des Bohrers kann jedoch auf Grund der Kompaktheit der erfindungsgemäßen Vorrichtung sicherer mit einem herkömmlichen an der Bohrmaschine angebrachten Anschlag kontrolliert werden.

Das Kühlmittel ist bei dieser Ausführungsform vorzugsweise gelartig. Das Kühlmittel kann durch eine schwammartige Struktur aufgenommen werden, die zwischen der ersten und zweiten Wand angebracht ist. Ein derartiger Aufbau verhindert die Kühlmittelabgabe insbesondere durch die zweite Wand nach außen, während der Bohrer durch Kontakt mit dem Schwamm und Zusammendrücken desselben beim Bohren ausreichend benetzt und Bohrstaub gut aufgenommen wird.

Weiter bevorzugt kann die erfindungsgemäße Vorrichtung eine Zentrierungsmarkierung aufweisen. Diese Markierung kann entweder durch den vorstehend erwähnten Verschluss direkt auf der Bohrung sichtbar sein (beispielsweise auf einen durchsichtigen Verschluss ober- oder unterhalb der Zentrierhülse aufgetragen sein) oder an Außenseiten der ersten Wand beispielsweise durch Vorsprünge markiert sein, die sich über das Zentrum der Bohrunterstützungsvorrichtung gegenüberliegen. Durch den größeren Abstand der Markierungen an den Außenseiten ist bei entsprechendem Anzeichnen eine noch genauere Platzierung der Vorrichtung auf der zu bohrenden Wand möglich.

Weiter vorzugsweise ist der Verschluss nach Art eines Einwegventils oder Doppelventils gestaltet. Ein derartiges Ventil lässt das Durchstoßen mit dem Bohrer zu, verhindert jedoch das Herausströmen des Kühlmittels. Anregungen für einfache und kostengünstige vergleichbare Verschlüsse, die leicht auf die vorliegende Anwendung übertragbar sind, finden sich an Flaschen zum Aufbewahren und Abgeben von zähflüssigen Fluiden wie Honig, Ketchup und dergleichen.

Die Bohrunterstützungsvorrichtung ist vorzugsweise als Wegwerfartikel, beispielsweise als Spritzgussteil oder als Kombination von Spritzguss mit einem weiteren Verfahren zum Einbringen des Kühlmittels konstruiert, da bei jeder Bohrung Staub anfällt, der das Haftmittel und/oder das Kühlmittel verschmutzt. Dadurch kann für jede Bohrung leicht eine neue Bohrunterstützungsvorrichtung verwendet werden, während die verbrauchte mitsamt dem daran haftenden und darin enthaltenen Bohrstaub entsorgt wird.

Die vorliegende Erfindung umfasst als eine weitere Ausführungsform eine Bohrunterstützungsvorrichtung nach Anspruch 5. Ein derartiger Aufbau kann dieselben Vorteile hinsichtlich Kühlung und Bohrstaubaufnahme aufweisen wie vorstehend für eine Vorrichtung mit integrierter zweiter Wand und zwischen den beiden Wänden vorgesehenem Kühlmittel erörtert. Zudem kann bei einer Zweiteilung in Pad und Bohrunterstützungsvorrichtung eine freiere Werkstoffauswahl für die beiden getrennten Teile erfolgen, was die Fertigung vereinfachen kann. Schließlich ist es möglich, nur das Pad und eventuell das Haftmittel, beispielsweise ein doppelseitiges Klebeband oder einen schwach adhäsiven Klebstoff (z.B. Sprühklebstoff) als Wegwerfartikel zu konzipieren, die für jede Bohrung an einer dauerhaft einsetzbaren Zentrierhülse aufbringbar sind. Dies hat den weiteren Vorteil, dass eine einzige Art von Pad für verschiedene Bohrdurchmesser und/oder Bohrwinkel verwendbar ist, so dass die Produktionskosten für die Pads durch Massenproduktion höherer Stückzahlen geringer werden. Gleichzeitig können die Zentrierhülsen für die Wiederverwendung aufwändiger hergestellt werden, ohne die Gesamtkosten des eingesetzten Systems zu erhöhen.

Das Pad wird erfindungsgemäß staubdicht an der Bohrunterstützungsvorrichtung angebracht. Dazu sind verschiedene Verfahren denkbar, beispielsweise kann das Pad am Rand der Bohrunterstützungsvorrichtung aufgeklebt werden oder an der Bohrunterstützungsvorrichtung kann ein umlaufender Vorsprung vorgesehen sein, über den das Pad beispielsweise mit einem Gummizug greift, um die Vorrichtung zu umschließen. Die Zentrierhülse kann Vorsprünge aufweisen, die das Pad beim Aufbringen auf die Bohrunterstützungsvorrichtung durchstoßen. Dadurch kann das Kühlmittel bereits vor dem Durchstoßen des Pads mit dem Bohrer in die Zentrierhülse geführt werden, so dass beim vollständigen Durchstoßen des Pads durch den Bohrer bereits der Hauptteil des Kühlmittels in die Zentrierhülse gedrückt wird. Selbstverständlich kann das Pad auch die vorstehend mit Bezug auf eine direkt mit Kühlmittel versehenen Bohrunterstützungsvorrichtung erwähnten Merkmale aufweisen, wie (teilweise oder vollständige) Durchsichtigkeit, Zentriermarkierungen oder durchstoßbare Verschlüsse insbesondere mit Ventilfunktion. Außerdem kann das Pad die vorstehend erörterte schwammartige Struktur im Innern aufweisen, die das Kühlmittel (und im Einsatz den Bohrstaub) aufnimmt.

Wie durch Versuche deutlich wurde, konnte durch den Einsatz der erfindungsgemäßen Bohrunterstützungsvorrichtung die Zeit für das Bohren von zwölf Löchern mit Durchmesser von 6 mm in harten Fliesen (eine typische Zahl bei einer Badrenovierung) von zwei Stunden (beim Vergleichsbeispiel wurde der Bohrer zum Kühlen regelmäßig herausgezogen und in ein Kühlmedium getaucht) auf zwanzig Minuten, also auf ein Sechstel, verringert werden. Hierbei fielen vor allem Vorarbeiten wie das Anbringen einer Zentriervorrichtung und Nacharbeiten wie die Beseitigung des Bohrstaubs weg. Gleichzeitig erhöhte sich die Standzeit der Bohrer durch die verbesserte Kühlung während des Bohrens auf das Dreifache, was zu einer weiteren signifikanten Kosteneinsparung führte (Kosten eines für den Versuch eingesetzten diamantbeschichteten Hohlbohrers lagen zur Zeit der Anmeldung bei 60 €).

Die Erfindung wird nun anhand einer Ausführungsform unter Bezugnahme auf die beigefügten Figuren beschrieben. In den Figuren zeigen:
Fig. 1 eine erfindungsgemäße Bohrunterstützungsvorrichtung nach einer ersten Ausführungsform an einer zu durchbohrenden Wand,
Fig. 2 ein Pad, das dazu vorgesehen ist, an der Bohrunterstützungsvorrichtung nach der zweiten Ausführungsform anbringbar zu sein,
Fig. 3 eine Bohrunterstützungsvorrichtung nach einer zweiten Ausführungsform,
Fig. 4 die Bohrunterstützungsvorrichtung nach Fig. 3 mit dem daran angebrachten Pad nach Fig. 2, und
Fig. 5 ein Detail des Verschlusses der Bohrunterstützungsvorrichtung, der eine Ventilfunktion aufweist.

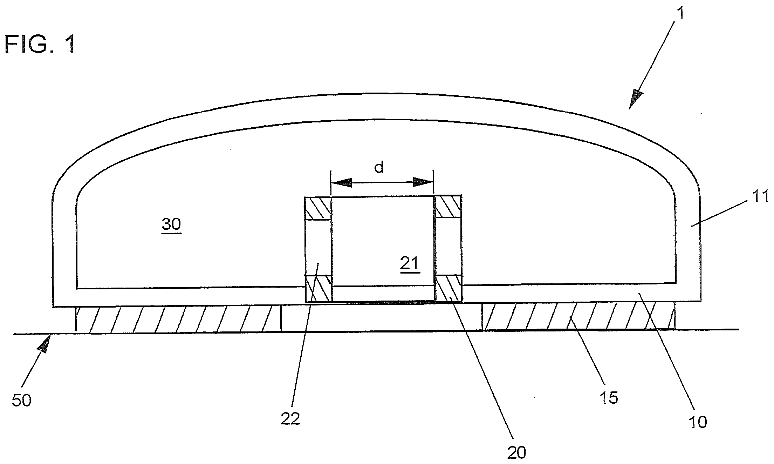

Fig. 1 zeigt einen Schnitt durch eine erfindungsgemäße Bohrunterstützungsvorrichtung 1 nach einer ersten Ausführungsform. Die Bohrunterstützungsvorrichtung 1 umfasst eine erste Wand 10, eine Zentrierhülse 20, und einen Klebstoff (eine Klebstoffschicht) 15, der (die) als Haftmittel auf die erste Wand 10 aufgebracht ist.

Während des Lagerns, d.h. vor dem Einsatz der Bohrunterstützungsvorrichtung 1 wird der Klebstoff 15 in herkömmlicher Weise beispielsweise durch eine (hier nicht gezeigte) Folie abgedeckt. Alternativ wird der Klebstoff 15 kurz vor dem Einsatz der Bohrunterstützungsvorrichtung aufgebracht, beispielsweise als Sprühklebstoff. Als Klebstoff wird ein insbesondere von der zu bohrenden Fläche leicht rückstandsfrei ablösbarer Klebstoff verwendet, beispielsweise ein Klebstoff auf Basis synthetischer Elastomere wie SprayMount von 3M oder auf Basis von Naturkautschuk wie Fixogum von Marabu. Alternativ kann ein Klebepad 15 oder 15a (vgl. Fign. 1, 3 und 4) bereits fest mit der ersten Wand 10 verbunden sein, dessen zu einer Zimmerwand 50 zeigende Seite vergleichbare Eigenschaften wie die vorstehend genannten Klebstoffe aufweist und das durch seine Dicke auch kleine Unebenheiten der Zimmerwand 50 ausgleichen kann.

Eine Zentrierhülse 20 der Bohrunterstützungsvorrichtung 1 ist winklig, insbesondere rechtwinklig, zur ersten Wand 10 vorgesehen und eines ihrer axialen Enden schließt bündig mit der ersten Wand 10 ab. Die Zentrierhülse 20 ist beispielsweise aus einem Kunststoff gefertigt und weist einen Innendurchmesser d passend zum Durchmesser des zu verwendenden Bohrers auf. Noch genauer ist der Innendurchmesser der Hülse so an den Bohrer angepasst, dass der Bohrer in der Hülse führbar ist, d.h. eine geringe Spielpassung vorliegt. Weiter umfasst die Bohrunterstützungsvorrichtung 1 eine zweite Wand 11, die an die erste Wand anschließt und mit dieser einen Hohlraum 30 bildet. Die zweite Wand 11 ist hier kuppelförmig gezeigt; selbstverständlich kann sie aber auch andere Formen wie beispielsweise die Form eines Hohlzylinders aufweisen, sofern sie mit der ersten Wand 10 den Hohlraum 30 bildet. Zudem ist die Wand 11 vorzugsweise zumindest zum Teil elastisch, so dass sie nach dem Durchstoßen der Wand 11 durch den Bohrer (wie später beschrieben) am Bohrer anliegt. Die Wände 10 und 11 können aus demselben Material, beispielsweise einem Silikon, oder aus unterschiedlichen Materialien gefertigt sein. Der Hohlraum 30 ist mit einem (nicht gezeigten) Kühlmittel, beispielsweise einem wasserhaltigen Gel, gefüllt. In der vorliegenden Ausführungsform erstreckt sich die Zentrierhülse 20 auf der von der ersten Wand 10 abgewandten Seite nicht bis zur zweiten Wand 11, so dass das Gel auch einen Innenraum 21 der Zentrierhülse 20 füllt. Zudem weist die Zentrierhülse 20 mindestens einen Durchbruch 22, üblicherweise mehrere Durchbrüche 22 auf, durch die ihr Innenraum 21 mit dem Hohlraum 30 außerhalb der Zentrierhülse 20 in Verbindung steht. Sowohl das Kühlmittel als auch die Wände 10 und 11 und der Klebstoff 15 sind nach dieser Ausführungsform durchsichtig. Zudem wird im hier gezeigten Beispiel kein Klebstoff 15 zwischen der Zentrierhülse 20 und der Zimmerwand 50 vorgesehen, um die Sicht auf die zu bohrende Stelle der Zimmerwand 50 zu gewährleisten.

Erfindungsgemäß wird die Bohrunterstützungsvorrichtung 1 nach dem Anzeichnen einer Markierung für ein in eine Zimmerwand 50 zu bohrenden Lochs so angebracht (also auf die Zimmerwand 50 geklebt), dass die Markierung und später das gebohrte Loch mittig in der Zentrierhülse 20 liegt. Wenn die wesentlichen Teile der Bohrunterstützungsvorrichtung 1 nach dieser Ausführungsform (zumindest in einer nicht gezeigten Bilckrichtung in Fig. 1 von oben auf die Wand 50) durchsichtig sind, hat der Nutzer beim Anbringen der Bohrunterstützungsvorrichtung 1 jederzeit freie Sicht auf die angezeichnete Markierung auf der Zimmerwand 50.

Nach dem Anbringen der Bohrunterstützungsvorrichtung 1 an der Zimmerwand 50 durchstößt der Nutzer die zweite Wand 11 der Bohrunterstützungsvorrichtung mit dem (nicht gezeigten) Bohrer einer (nicht gezeigten) Handbohrmaschine und führt diesen durch die Zentrierhülse 20 auf die zu durchbohrende Zimmerwand 50. Dabei taucht der Bohrer nach dem Durchstoßen der zweiten Wand 11 in das Kühlmittel ein. Durch die vorstehend beschriebene Elastizität der zweiten Wand 11 schmiegt sich diese an den Bohrerschaft an, so dass kein oder nur sehr wenig Kühlmittel austritt.

In der Folge dreht der Bohrer im Kühlmittel und wird in der Zentrierhülse 20 aufgenommen und geführt. Anschließend dringt er im gekühlten und geführten Zustand durch die Wand 10 in die zu bohrende Zimmerwand 50 ein. Genauer gesagt dreht der Bohrerschaft und die Seitenschneiden des Bohrers, beim Anbohren anfänglich auch die Bohrerspitze, in der Zentrierhülse 20 im Kühlmittel. Der aus dem Loch über den Bohrer abgeführte Bohrstaub wird hauptsächlich im Kühlmittel aufgenommen. Ein kleinerer Teil des Bohrstaubs kann am Klebstoff 15 direkt um das Loch haften bleiben. Durch die Drehung des Bohrers wird gleichzeitig das Kühlmittel in der Bohrunterstützungsvorrichtung 1 verwirbelt und zirkuliert dadurch um den Bohrer, was die Kühlwirkung erhöht. Zudem wird der aus dem Loch abgeführte Bohrstaub so entfernt und verbleibt im Kühlmittel. Alternativ zum hier gezeigten vollständig geraden Aufbau der Zentrierhülse 20 wäre es mit einem (nicht gezeigten) kegelstumpfförmigen Einlauf der Zentrierhülse möglich, das Kühlmittel nur an der vom Bohrloch in die Zimmerwand 50 abgewandten Seite zum Bohrer vordringen zu lassen. Vorzugsweise sind jedoch wie hier gezeigt in der Zentrierhülse 20 Durchbrüche 22 (mindestens ein Durchbruch 22) vorgesehen. Durch diese Durchbrüche 22 können Kühlmittel und Bohrstaub um den Bohrer besser zu- und abgeführt werden als bei einer Zentrierhülse 20 ohne Durchbrüche. Die hier zwei Durchbrüche 22 sind selbstverständlich nur beispielhaft gezeigt, es ist auch möglich, eine andere, z.B. gitterartige Struktur der Zentrierhülse 20 mit mehreren Durchbrüchen übereinander oder für die Zu- und Abfuhr des Kühlmittels durch die Hülse 20 an den Bohrer anderweitig optimiert angebrachte Durchbrüche vorzusehen.

Ist das Loch in der gewünschten Tiefe gebohrt, wird der Bohrer wie üblich aus dem Loch und der Zentrierhülse herausgezogen. Dabei fällt kein oder zumindest sehr wenig Bohrstaub zu Boden, weil der mit Kühlmittel benetzte Bohrer einen kleineren Teil des entstandenen Bohrstaubs bindet und der Hauptteil des Bohrstaubs wie vorstehend erläutert in der Bohrunterstützungsvorrichtung bzw. im darin verbliebenen Kühlmittel aufgenommen wird. Nach dem Entfernen des Bohrers wird die Bohrunterstützungsvorrichtung von der Zimmerwand 50 abgezogen und weggeworfen.

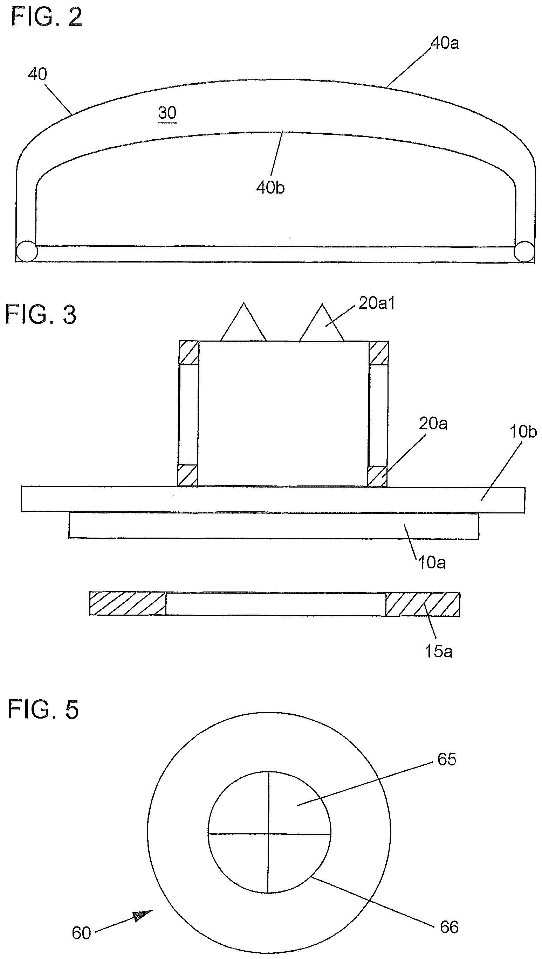

Nachstehend wird anhand der Figuren 2 bis 4 eine Bohrunterstützungsvorrichtung nach einer zweiten Ausführungsform beschrieben. Die Vorrichtung nach der zweiten Ausführungsform unterscheidet sich von der Vorrichtung nach der ersten Ausführungsform dadurch, dass sie dreiteilig aufgebaut ist, nämlich ein Klebstoffpad 15a und eine (wiederverwendbare) erste Wand 10a mit einer Zentrierhülse 20a (siehe Fig. 3) sowie ein Kühlmittelpad 40 (siehe Fig. 2) aufweist.

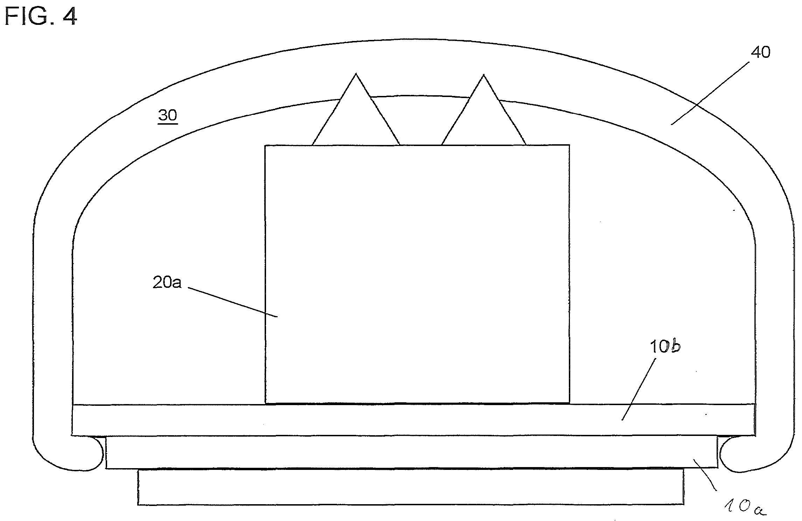

Wie vorstehend bei der ersten Ausführungsform bereits erörtert und aus Fig. 4 erkennbar ist das Klebstoffpad 15a an der ersten Wand 10a anbringbar und dient dazu, die Bohrunterstützungsvorrichtung, hier bestehend aus erster Wand 10a mit Zentrierhülse 20a und Kühlmittelpad 40, an der Zimmerwand 50 zu halten.

Die Zentrierhülse 20a nach der zweiten Ausführungsform weist ähnlich der Zentrierhülse 20 einen an den Durchmesser des einzusetzenden Bohrers angepassten Innendurchmesser auf. Außerdem weist sie auch Durchbrüche ähnlich den Durchbrüchen 22 auf. Unterschiede zur Zentrierhülse 20 nach der ersten Ausführungsform bestehen darin, dass die Zentrierhülse 20a stabiler als in der ersten Ausführungsform hergestellt ist, beispielsweise aus Metall, und dass an der Zentrierhülse Schneidvorsprünge (Zacken) 20a1 vorgesehen sind, die vom zu bohrenden Loch weg vorstehen.

Auch die erste Wand 10a der Bohrunterstützungsvorrichtung nach der zweiten Ausführungsform ist stabiler (z.B. aus Metall) ausgeführt als die erste Wand 10 nach der ersten Ausführungsform. Zudem weist die erste Wand 10a auf ihrer von der Zimmerwand 50 abgewandten Seite in diesem Beispiel einen umlaufenden Vorsprung 10b auf. Obwohl hier nicht gezeigt, setzt sich das Loch der Zentrierhülse 20a durch die Wand 10a fort. Das Klebstoffpad 15a nach der zweiten Ausführungsform wird vor dem Einsatz der Bohrunterstützungsvorrichtung entweder um das zu bohrende Loch auf der Zimmerwand 50 oder auf die Wand 10a (auf der der Zentrierhülse 20a gegenüber liegenden Seite) angebracht. Dabei wird das vorstehend erwähnte Loch in der Wand 10a freigelassen.

Das Kühlmittelpad 40 weist, wie aus der Schnittzeichnung der Fig. 2 zu erkennen ist, zwei beispielsweise folienartige Außenwände bzw. Häute 40a, 40b auf, zwischen denen der Hohlraum 30 geformt ist, in den ein Kühlmittel eingefüllt ist. Vorzugsweise ist das Pad 40 wie vorstehend bei der ersten Ausführungsform erwähnt durchsichtig und beispielsweise aus einem Silikon hergestellt.

Im Unterschied zur ersten Ausführungsform wird in der zweiten Ausführungsform das Kühlmittelpad 40 derart an der Wand 10 befestigt (beispielsweise mittels eines nicht gezeigten Gummizugs über den Vorsprung 10b gezogen, alternativ rundum aufgeklebt), dass eine staubdichte Verbindung zwischen der ersten Wand 10 und dem Kühlmittelpad 40 entsteht. Die Schneidvorsprünge 20a1 drücken dann, wie in Fig. 4 gezeigt, entweder bereits aufgrund des Drucks beim Aufziehen/Aufkleben des Kühlmittelpads 40 oder spätestens durch den Druck des Bohrers auf den Vorsprung 10b beim Einführen des Bohrers durch das Pad 40 in die Zentrierhülse 20a vor dem Bohren Austrittslöcher in das Kühlmittelpad 40, durch die ein Teil des Kühlmittels in die Zentrierhülse 20a und ihre Umgebung innerhalb der Bohrunterstützungsvorrichtung 1 austritt.

Fig. 4 zeigt die Bohrunterstützungsvorrichtung nach der zweiten Ausführungsform im Zustand vor dem Bohren. Im Unterschied zur ersten Ausführungsform füllt das Kühlmittel im Pad nicht den gesamten Hohlraum oberhalb der Zentrierhülse. Dennoch wird, wenn (in der Figur) der Bohrer von oben durch die obere Haut 40a des Kühlmittelpads 40 in den Hohlraum 30, der das Kühlmittel enthält, und dann durch die untere Haut 40b des Kühlmittelpads 40 in die Zentrierhülse 20a eingebracht wird, der durch das Kühlmittel dringende Bohrer ausreichend gekühlt. Zudem gibt es im Hohlraum zwischen Kühlmittelpad 40 und Zentrierhülse 20a zusätzlichen Raum für die Aufnahme des Bohrstaubs (und des aus dem Pad 40 austretenden Kühlmittels).

Der Einsatz der Bohrunterstützungsvorrichtung 1 nach der zweiten Ausführungsform kann auf zwei Arten erfolgen: Entweder wird vor dem Bohren eines angezeichneten Lochs das Kühlmittelpad 40 über den Vorsprung 10b der ersten Wand 10 gezogen und anschließend die gesamte Bohrunterstützungsvorrichtung 1 mittels des Klebstoffs 15 bzw. des Klebstoffpads 15a über das angezeichnete zu bohrende Loch auf der Zimmerwand 50 angebracht, oder es wird zunächst nur die Wand 10 (mit Vorsprung 10b und Zentrierhülse 20a) auf die zu durchbohrende Zimmerwand aufgebracht und anschließend das Kühlmittelpad 40 am Vorsprung 10b befestigt.

Das letztgenannte Verfahren hat den Vorteil, dass die Ausrichtung der Wand 10 mit der Zentrierhülse 20a am zu bohrenden Loch in der Zimmerwand 50 erfolgen kann, ohne dass das Kühlmittelpad die Sicht beeinträchtigen kann, da es erst danach angebracht wird. Dadurch vergrößert sich die Materialauswahl für das Kühlmittelpad 40 nebst dem Kühlmittel, weil das Kühlmittelpad 40 beim Anbringen der Wand 10 an der Zimmerwand 50 nicht die Sicht auf das Bohrloch behindert. Daher kann das Kühlmittelpad bzw. das Kühlmittel auch undurchsichtig sein, ohne dass es zu Problemen kommt, weil die Ausrichtung der Bohrunterstützungsvorrichtung zum Bohrloch bereits vor dem Anbringen des Kühlmittelpads erledigt ist. Zweckmäßigerweise wird bei einem undurchsichtigen Kühlmittelpad 40 eine (hier nicht gezeigte) Zentrierungsmarkierung auf der Wand 40a in der Mitte vorgesehen, um ein sicheres Einführen des Bohrers in die Zentrierhülse 20a der Bohrunterstützungsvorrichtung 1 zu erleichtern. Auch die Wand 10a mit der Zentrierhülse 20a kann einfacher gefertigt werden, da kein (zusätzlich mit Kühlmittel zu füllender) Hohlraum 30 und keine zweite Wand 11 zu fertigen ist. Die Kühlmittelpads 40 können vollständig getrennt vom Hauptteil der Bohrunterstützungsvorrichtung, bestehend aus der Wand 10a (eventuell mit den Vorsprüngen 10b wie in Fig. 4 gezeigt) und der Zentrierhülse 20a (eventuell mit den Schneidvorsprüngen 20a1), hergestellt werden. Die Kühlmittelpads können weiterhin, beispielsweise durch unterschiedliche Kühlmittel, unterschiedliche Volumen etc. an unterschiedliche Bohruntergründe (Beton, Fliesen, Mauerwerk, Stahl etc.) angepasst werden. Schließlich kann durch das kleinere Volumen ein günstigeres Packmaß der häufig auszutauschenden Kühlmittelpads 40 erreicht werden. Daher können die Einzelteile der Bohrunterstützungsvorrichtung nach der zweiten Ausführungsform insgesamt günstiger gefertigt werden. Weiterhin ist es möglich, mehrere unterschiedliche Wände 10 mit verschiedenen an die jeweils verwendeten Bohrerdurchmesser angepassten Durchmessern d der Zentrierhülsen 21 wiederverwendbar vorzusehen und lediglich Klebstoffpads 15a und Kühlmittelpads 40 auszutauschen. Diese Klebstoff- und Kühlmittelpads können für mehrere Bohrerdurchmesser verwendbar vorgesehen sein, so dass sich eine Stückzahlsteigerung und somit eine weitere Kostensenkung bei deren Fertigung ergibt.

Obwohl vorstehend eine Befestigung des Kühlmittelpads 40 an der ersten Wand 10a über einen Gummizug an einem Vorsprung 10b erläutert wurde, ist die Befestigung nicht darauf beschränkt. Beispielsweise kann das Kühlmittelpad 40 auch (an seinem Umfang) auf die Rückseite der ersten Wand aufklebbar sein, oder es kann ein noch anderes Verbindungsverfahren wie ein Klettverschluss oder ein Einspannen zwischen der ersten Wand und einer weiteren Fläche, beispielsweise einem (nicht gezeigten) radial außen über den Vorsprung 10b schraubbaren oder magnetisch oder dergleichen dort haltenden Niederhalter eingesetzt werden, der das Kühlmittelpad 40 an dessen Außenumfang so auf die erste Wand 10 drückt, dass der Bohrstaub und das Kühlmittel zurückgehalten werden.

Als weiteres Verfahren zum Anbringen des Kühlmittelpads ist denkbar, zunächst ein doppelseitig klebendes Klebstoffpad an der ersten Wand 10a (d.h. zur Zimmerwand hin zeigend) anzubringen, dessen Durchmesser größer als der Durchmesser der ersten Wand 10a ist, das also über diese Wand 10a vorsteht. Wird dieses Klebstoffpad dann allseitig über die Wand 10a umgeschlagen, kann das Kühlmittelpad 40 anschließend auf den nach oben zeigenden Rand des Klebstoffpads 15a aufgeklebt werden.

Unabhängig von der Art der Verbindung zwischen Kühlmittelpad 40 und der ersten Wand 10a ist nur wichtig, dass eine während des Bohrens weitgehend staubdichte Verbindung entsteht, so dass kein Kühlmittel oder Bohrstaub in die Umgebung des Bohrlochs austritt.

Um ein insbesondere zentrisches Durchstoßen des der zweiten Wand 11 nach der ersten Ausführungsform bzw. des Kühlmittelpads 40 nach der zweiten Ausführungsform und die Ausrichtung in der Zentrierhülse zu erleichtern, kann oberhalb der Zentrierhülse in der ersten Wand 10 bzw. im Kühlmittelpad 40 zusätzlich zu oder anstelle der vorstehend erwähnten nicht gezeigten Zentrierungsmarkierung der Verschluss 60 als ein Ventil vorgesehen sein, das das Eindringen des Bohrers in das Kühlmittel erleichtert. Der Verschluss 60 kann beispielsweise (in der ersten Ausführungsform) aus einer Öffnung bestehen, die mit von der Außenseite (in der Figur von oben) einfach wegdrückbaren Ventillappen 65 versehen ist, die sich scharnierartig um ihre Ränder 66 klappen und durch leichten Druck elastisch zur Seite schieben lassen, ähnlich wie bei Trinkflaschen oder Dosiereinrichtungen beispielsweise für Honig oder Ketchup bekannt. In der zweiten Ausführungsform können zwei derartige Öffnungen mit entsprechenden Ventillappen übereinander angeordnet sein, die beide vom (nicht gezeigten) Bohrer durchstoßen werden, wenn er in die Zentrierhülse 20, 20a geschoben wird. Falls ein derartiges Ventil vorhanden ist, kann auf die Schneidvorsprünge 20a1 verzichtet werden. Insbesondere bei einem Kühlmittelpad 40 nach der zweiten Ausführungsform kann an der Außenhaut 40a ein Doppelventil (zwei übereinanderliegende Öffnungen) und an der Innenhaut 40b ein Einzelventil vorgesehen sein, um ein Austreten des Kühlmittels auf der Innenseite und damit hin zur Zentrierhülse 20a1 zu vereinfachen und das Austreten des Kühlmittels nach außen zu erschweren.

Da die Klappen der Ventile am Bohrer anliegen, wird ein Austreten des Kühlmittels aus der Bohrunterstützungsvorrichtung durch die Ventile verhindert.

Fig. 5 zeigt ein Detail eines derartigen Verschlusses 60 der Bohrunterstützungsvorrichtung 1, der eine Ventilfunktion aufweist. Dieser Verschluss 60 kann wie vorstehend beschrieben mit jeder der vorstehend genannten Ausführungsformen kombiniert werden, obwohl dies nicht gezeigt wurde. Ein derartiger Verschluss besteht in seiner einfachsten Form aus einer aus einem flexiblen Kunststoff, insbesondere Silikon, gefertigten Kappe, die die Bohrunterstützungsvorrichtung 1 bzw. das Kühlmittelpad 40 abschließt. Falls in der Bohrunterstützungsvorrichtung 1 ein relativ zähes Kühlmittel, beispielsweise ein Kühlgel, verwendet wird, kann der Verschluss wie hier angedeutet vorab geschlitzt sein, vorzugsweise kreuzweise oder in einer kuchenstückartigen Form, beispielsweise mit acht oder mehr voneinander getrennten und am Umfang der Kappe miteinander verbundenen Randstücken geschlitzt sein. Ein derartiger (mittig zentrierter) Kreuzschlitz gibt dem Nutzer den Punkt zum Ansetzen des Bohrers in seiner Mitte vor. Außerdem biegt der Bohrer die durch den Schlitz entstehenden Lappen 65 beim Eindringen an deren Rändern 66 nach innen, wobei sie sich an den Bohrer anschmiegen und die Eindringstelle weitgehend abdichten, so dass kaum Kühlmittel nach außen dringt. Zudem kann ein derartiger Schlitz beispielsweise durch das Abziehen einer Schutzhülle von den Flächen 65 geöffnet werden, die dann auch das Kühlmittel einschließt. Ein Schlitz und/oder definierte Ränder sind jedoch nicht unbedingt erforderlich, da die Bohrmaschine das relativ weiche Silikon des Ventils in der vorliegenden Ausführungsform durchbohren kann. Alternativ kann auch eine kreisrunde Schwächung des Bohrpads, vorzugsweise etwas kleiner als der Schaftdurchmesser des zugehörigen Bohrers vorgesehen sein. Durchstößt der Bohrer dieses kreisrunde Ventil, kann sich das elastische Material der Hülle um den Bohrer anschmiegen und dadurch abdichten. Außerdem kann auch eine Ritzung, d.h. eine nur teilweise Verringerung der Wandstärke, anstelle eines Schlitzes vorgesehen sein, um dasselbe Ergebnis zu erzielen. Schließlich kann das "Ventil" auch durch ein auf den Verschluss aufgeklebtes zweites Material, beispielsweise eine Metallfolie, gestaltet sein, die ein entsprechendes Loch verschließt und entweder vor dem Einsatz abgezogen oder vom Bohrer durchstoßen wird.

Neben den vorstehend gezeigten Ausführungsformen sind noch verschiedene Modifizierungen möglich, die ebenfalls in den Bereich der vorliegenden Erfindung fallen. Beispielsweise ist es möglich, die Bohrunterstützungsvorrichtung 1 nach der ersten Ausführungsform bzw. die Kühlmittelpads 40 nach der zweiten Ausführungsform im Innern mit einer schwammartigen Struktur zu versehen, die ein zu starkes Austreten des Kühlmittels noch besser verhindert.

Als Kühlmittel können handelsübliche Mittel zum Kühlen und Schmieren von Bohrern auf Wasserbasis, Ölbasis oder auch auf Gelbasis eingesetzt werden.

Der Klebstoff 15 bzw. das Klebstoffpad 15a ist vorzugsweise je nach dem Untergrund auszuwählen, in den gebohrt werden soll. Der Klebstoff sollte an der Bohrunterstützungsvorrichtung besser als an der Zimmerwand haften, aber vor allem rückstandsfrei von der Zimmerwand ablösbar sein.

Wie bereits erwähnt, ist die Bohrunterstützungsvorrichtung 1 vorzugsweise zumindest zum Teil aus durchsichtigem Material gefertigt. Insbesondere ermöglicht die Bohrunterstützungsvorrichtung beim Anbringen derselben und beim Ansetzen des Bohrers vorzugsweise einen freien Blick auf das angezeichnete zu bohrende Loch. Die erste Wand 10 mit der Zentrierhülse 20 ist dabei vorzugsweise aus einem vergleichsweise steifen durchsichtigen Material wie PMMA (Plexiglas) oder (in einem Beispiel der zweiten Ausführungsform) aus Metall hergestellt, während die zweite Wand 11 aus einem flexiblen Material beispielsweise auf Silikonbasis hergestellt wird. Diese zweite Wand 11 kann sich dann nach dem Durchstoßen an den Bohrer anschmiegen und dadurch das Austreten des Kühlmittels und des Bohrstaubs verhindern. Auch die Kühlmittelpads 40 nach der zweiten Ausführungsform sind vorzugsweise aus einem flexiblen Material hergestellt, das eine gewisse Dichtung zwischen Bohrer und vor allem der oberen Außenhaut 40a des Kühlmittelpads 40 ermöglicht, falls nicht der vorstehend erläuterte Verschluss 60 vorgesehen ist.

### Bezugszeichenliste

- 1: Bohrunterstützungsvorrichtung
- 10, 10a: erste Wand
- 10b: umlaufender Vorsprung
- 11: zweite Wand
- 15: Klebstoff
- 15a: Klebstoffpad
- 20, 20a: Zentrierhülse
- 20a1: Schneidvorsprung der Zentrierhülse
- 21: Innenraum der Zentrierhülse
- 22: Durchbruch der Zentrierhülse
- 30: Hohlraum
- 40: Kühlmittelpad
- 40a: obere Haut des Kühlmittelpads
- 40b: untere Haut des Kühlmittelpads
- 42: Gummizug (am Kühlmittelpad 40)
- 50: Zimmerwand
- 60: Verschluss
- 65: Ventillappen
- 66: Lappenkante (Scharnier)
- d: Innendurchmesser der Zentrierhülse

## Patentansprüche

1. Bohrunterstützungsvorrichtung (1) mit
einer Zentrierhülse (20, 20a) und
mindestens einer winklig zur Zentrierhülse (20, 20a) an einem axialen Ende der Zentrierhülse vorgesehenen ersten Wand (10, 10a),
wobei die erste Wand (10, 10a) an ihrer von der Zentrierhülse (20, 20a) abgewandten Seite ein Haftmittel (15) aufweist, um die Bohrunterstützungsvorrichtung (1) an einer Zimmerwand (50) anzubringen, weiter mit mindestens einer zweiten Wand (11), die an die erste Wand (10, 10a) anschließt und gemeinsam mit der ersten Wand (10, 10a) einen Hohlraum (30) um mindestens einen Teil der Zentrierhülse (20, 20a) bildet, **dadurch gekennzeichnet, dass** der Hohlraum (30) derart mit einem Kühlmittel gefüllt ist, dass der Bohrer durch das Kühlmittel geht, bevor er in die Zentrierhülse eindringt.

2. Bohrunterstützungsvorrichtung (1) nach Anspruch 1, wobei die Zentrierhülse (20, 20a) Durchbrüche (22) zwischen dem Hohlraum (30) und dem Innenraum (21) der Zentrierhülse (20, 20a) aufweist.

3. Bohrunterstützungsvorrichtung (1) nach einem der vorstehenden Ansprüche, wobei die die zweite Wand (11) und/oder die Zentrierhülse (20, 20a) ein- oder beidseitig einen mittels eines Bohrers durchstoßbaren Verschluss (60) aufweist.

4. Bohrunterstützungsvorrichtung (1) nach einem der vorstehenden Ansprüche, wobei zumindest Teile (11, 30) der Vorrichtung (1) durchsichtig sind.

5. Bohrunterstützungsvorrichtung (1) mit
einer Zentrierhülse (20a) und mindestens einer winklig zur Zentrierhülse (20a) an einem axialen Ende der Zentrierhülse vorgesehenen ersten Wand (10a), einem Klebstoff (15, 15a), zum Befestigen der Bohrunterstützungsvorrichtung (1) auf einer Zimmerwand (50), und
**gekennzeichnet durch** ein Pad (40) zum Anbringen an der Bohrunterstützungsvorrichtung (1) auf der Seite der Zentrierhülse (20a) an der ersten Wand (10a), wobei das Pad (40) zwei Häute (40a, 40b) und einen zwischen den zwei Häuten geformten mit einem Kühlmittel befüllten Hohlraum (30) umfasst, und im Bereich seines Umfangs derart an der ersten Wand (10a) befestigbar ist, dass eine staubdichte Verbindung zwischen der ersten Wand (10a) und dem Pad (40) entsteht.

6. Bohrunterstützungsvorrichtung (1) nach Anspruch 5, wobei das Pad (40) zumindest in seinem mittleren Bereich, der im an der Bohrunterstützungsvorrichtung (1) befestigten Zustand über der Zentrierhülse (20, 20a) der Bohrunterstützungsvorrichtung (1) liegt, durchsichtig ist.

7. Bohrunterstützungsvorrichtung (1) nach einem der Ansprüche 5 oder 6, wobei das Pad (40) auf der im montierten Zustand von einer Zimmerwand (50) abgewandten Seite eine Zentrierungsmarkierung in seiner Mitte aufweist.

8. Bohrunterstützungsvorrichtung (1) nach einem der Ansprüche 5 bis 7, wobei das Pad (40) im Innern eine schwammartige Stützstruktur aufweist, die das Kühlmittel aufnimmt.

## Claims

1. Drilling support device (1), comprising
a centering sleeve (20, 20a) and
at least one first wall (10, 10a) provided at an axial end of the centering sleeve at an angle to the centering sleeve (20, 20a),
wherein the first wall (10, 10a) has an adhesive (15) on its side facing away from the centering sleeve (20, 20a) for attaching the drilling support device (1) to a room wall (50),
further comprising at least one second wall (11), which is adjacent to the first wall (10, 10a) and together with the first wall (10, 10a) forms a cavity (30) around at least a part of the centering sleeve (20, 20a),
**characterized in that** the cavity (30) is filled with a coolant in such a way that the drill passes through the coolant before it penetrates the centering sleeve.

2. Drilling support device (1) according to claim 1, wherein the centering sleeve (20, 20a) has openings (22) between the cavity (30) and the interior (21) of the centering sleeve (20, 20a).

3. Drilling support device (1) according to one of the preceding claims, wherein the second wall (11) and/or the centering sleeve (20, 20a) has a closure (60) on one or both sides that can be pierced by a drill bit.

4. Drilling support device (1) according to one of the preceding claims, wherein at least parts (11, 30) of the device (1) are transparent.

5. Drilling support device (1), comprising
a centering sleeve (20a) and at least one first wall (10a) provided at an axial end of the centering sleeve at an angle to the centering sleeve (20a),
an adhesive (15, 15a) for fastening the drilling support device (1) to a room wall (50), and
**characterized by** a pad (40) for attachment to the drilling support device (1) on the side of the centering sleeve (20a) on the first wall (10a), wherein the pad (40) comprises two skins (40a, 40b) and a cavity (30) filled with a coolant formed between the two skins, and can be fastened to the first wall (10a) in the region of its circumference in such a way that a dust-tight connection is formed between the first wall (10a) and the pad (40).

6. Drilling support device (1) according to claim 5, wherein the pad (40) is transparent at least in its central region, which, when fixed to the drilling support device (1), lies above the centering sleeve (20, 20a) of the drilling support device (1).

7. Drilling support device (1) according to one of claims 5 or 6, wherein the pad (40) has a centering mark in its center on the side facing away from a room wall (50) when mounted.

8. Drilling support device (1) according to one of claims 5 to 7, wherein the pad (40) has a sponge-like support structure inside which contains the coolant.

## Revendications

1. Dispositif d'aide au forage (1) avec
une douille de centrage (20, 20a) et
au moins une première paroi (10, 10a) prévue à un angle par rapport à la douille de centrage (20, 20a) à une extrémité axiale de la douille de centrage,
dans lequel la première paroi (10, 10a) présente sur son côté opposé à la douille de centrage (20, 20a) un moyen d'adhésion (15) pour appliquer le dispositif d'aide au forage (1) sur une paroi de chambre (50), avec en outre au moins une seconde paroi (11) qui se raccorde à la première paroi (10, 10a) et forme, conjointement avec la première paroi (10, 10a), une cavité (30) autour d'au moins une partie de la douille de centrage (20, 20a), **caractérisé en ce que** la cavité (30) est remplie d'un réfrigérant de sorte que le foret traverse le réfrigérant avant de pénétrer dans la douille de centrage.

2. Dispositif d'aide au forage (1) selon la revendication 1, dans lequel la douille de centrage (20, 20a) présente des perçages (22) entre la cavité (30) et l'espace intérieur (21) de la douille de centrage (20, 20a).

3. Dispositif d'aide au forage (1) selon l'une quelconque des revendications précédentes, dans lequel la seconde paroi (11) et/ou la douille de centrage (20, 20a) présente d'un côté ou des deux côtés une fermeture (60) pouvant être percée au moyen d'un foret.

4. Dispositif d'aide au forage (1) selon l'une quelconque des revendications précédentes, dans lequel au moins des parties (11, 30) du dispositif (1) sont transparentes.

5. Dispositif d'aide au forage (1) avec
une douille de centrage (20a) et au moins une première paroi (10a) prévue à un angle par rapport à la douille de centrage (20a) à une extrémité axiale de la douille de centrage, un adhésif (15, 15a) pour fixer le dispositif d'aide au forage (1) sur une paroi de chambre (50), et
**caractérisé par** un tampon (40) à appliquer au niveau du dispositif d'aide au forage (1) sur le côté de la douille de centrage (20a) au niveau de la première paroi (10a), dans lequel le tampon (40) comprend deux peaux (40a, 40b) et une cavité (30) formée entre les deux peaux et remplie d'un réfrigérant, et qui peut être fixé à la première paroi (10a) au niveau de sa circonférence de sorte qu'une connexion étanche aux poussières soit créée entre la première paroi (10a) et le tampon (40).

6. Dispositif d'aide au forage (1) selon la revendication 5, dans lequel le tampon (40) est transparent au moins dans sa zone centrale qui, à l'état fixé au niveau du dispositif d'aide au forage (1), se situe au-dessus de la douille de centrage (20, 20a) du dispositif d'aide au forage (1).

7. Dispositif d'aide au forage (1) selon l'une quelconque des revendications 5 ou 6, dans lequel le tampon (40) présente un repère de centrage en son centre sur le côté opposé à une paroi de chambre (50) à l'état monté.

8. Dispositif d'aide au forage (1) selon l'une quelconque des revendications 5 à 7, dans lequel le tampon (40) présente à l'intérieur une structure de soutien de type éponge qui reçoit le réfrigérant.
